# EUROPEAN PATENT APPLICATION

(11) **EP 3 229 563 A1**
(43) Date of publication of application: **11.10.2017**
(21) Application number: 17164203.6
(22) Date of filing: 31.03.2017
(51) Int. Cl.: H05G 1/34, H05G 1/46, H05G 1/26

(54) **RADIOLOGICAL EQUIPMENT WITH ADAPTIVE CONTROL**

(30) Priority: 05.04.2016 IT UA20162320
(71) Applicant: General Medical Merate S.p.A., 24068 Seriate (IT)
(72) Inventor: PERLETTI, Ivan, 24068 SERIATE (BG) (IT)
(74) Representative: De Ros, Alberto

(57) **Abstract**

The radiological equipment (1) comprises an X-ray tube (10) and a control system (30) adapted to control the X-ray tube (10); the control system (30) has: a first output (32) adapted to provide a first signal (HV) to the X-ray tube (10) corresponding to an anode voltage, a second output (34) adapted to provide a second signal (LV) to the X-ray tube (10) corresponding to a filament voltage, a first input (36) adapted to receive (20) a third signal (AI) corresponding to detected anode current values (MI(n)), a second input (38) adapted to receive a user command from an interface system (40) relating to a desired value (DI) of anode current for an exposure to be performed through the equipment; the control system (30) is adapted to generate the first signal (HV) and the second signal (LV) as a function of detected values (MI(n)) and the desired value (DI); the control system (30) implements an adaptive control at least as far as said first signal (HV) is concerned.

## Description

### FIELD OF THE INVENTION

The present invention relates to a radiological equipment with adaptive control of the X-ray tube.

### PRIOR ART

When there is a need to make an exposure by means of a radiological equipment with X-ray tube, the X-ray tube of the equipment must emit X-rays.

In order for the X-ray tube to emit X-rays, a high voltage is applied between its cathode and its anode and a low voltage is applied to its filament.

According to common practice, the operator selects the desired anode voltage and the desired anode current, the control system of the equipment determines the filament voltage (which is a low voltage) according to a table stored therein, and then performs the exposure for a certain time while keeping the anode voltage (which is a high voltage) and the filament voltage (which is a low voltage) constant.

However, this control method does not adequately take into account that the dynamics of each tube:
- differs from that of other tubes (even of the same model and brand),
- depends on past exposures,
- is affected by degradation due to the use of the tube,
- is affected by thermodynamic conditions around the tube,
- changes during the exposure itself.

Control systems are known which keep the anode voltage constant and control the filament voltage so as to try to keep the anode current constant.

However, the effect of a change of the filament voltage on the anode current is very slow, such as 400-600 ms.

Therefore, this control method is critical and is not adapted for short-term exposures, such as 10-100 ms.

### SUMMARY

The general object of the present invention is to improve the known solutions related to the control of the X-ray tube.

In particular, a more specific object of the present invention is to improve the transient time of known X-ray tube control systems.

This object is achieved by the radiological equipment having the features set forth in the appended claims.

The appended claims are an integral part of the present description but are not reproduced hereinafter for shortness.

The basic idea of the present invention is to implement an adaptive control.

### LIST OF FIGURES

The present invention will become clearer from the following detailed description to be taken in conjunction with the accompanying drawings, in which:
Fig. 1 shows a partial block diagram of an exemplary embodiment of a radiological equipment according to the present invention, and
Fig. 2 shows a block diagram of the control system of the radiological equipment in Fig. 1 connected to the X-ray tube thereof.

As it is easily understood, there are various ways to practically implement the present invention, which is defined in its main advantageous aspects in the appended claims.

### DETAILED DESCRIPTION

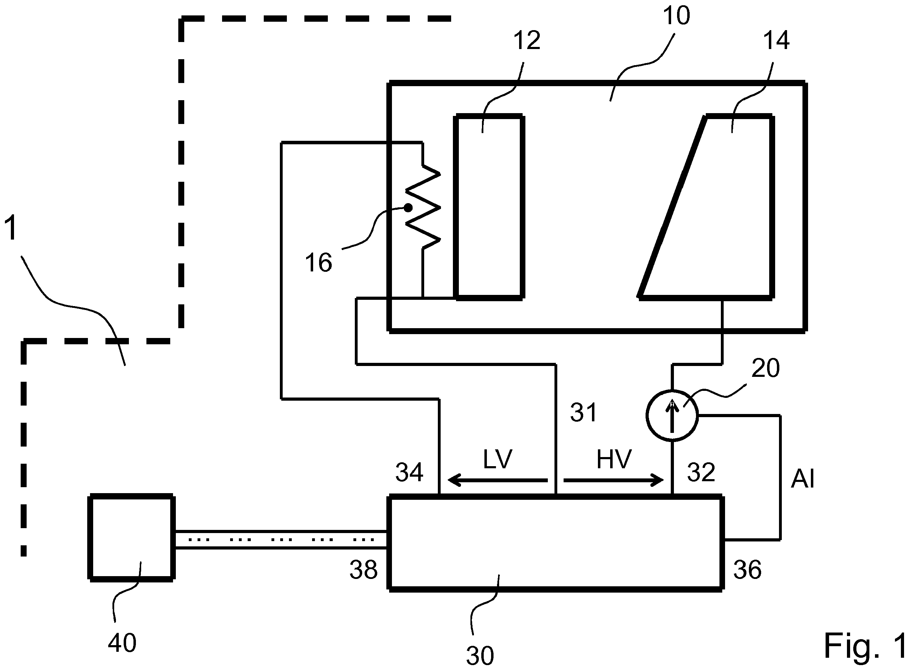

Fig. 1 partially shows an exemplary embodiment 1 of a radiological equipment. Equipment 1 comprises an X-ray tube 10, a control system 30 of tube 10 and a user interface system 40 connected to an input 38 of the control system 30; input 38 may correspond to one or more electric terminals.

The control system 30 generates the high anode voltage HV at an output 32, more precisely between the negative terminal 32 and the positive terminal 31, and the low filament voltage LV at an output 34, more precisely between terminal 34 and terminal 31. A current meter 20 is provided which measures the anode current and which generates a signal AI accordingly; signal AI arrives at an input 36 of the control system 30.

The current meter 20 may be considered as a component of the X-ray tube 10, or a component of the control system 30 or as a component separate from the X-ray tube 10 and from the control system 30.

Fig. 1 shows the main components of the X-ray tube 10, that is to say: a cathode 12, an anode 14 and a filament 16; these components are generally known as such.

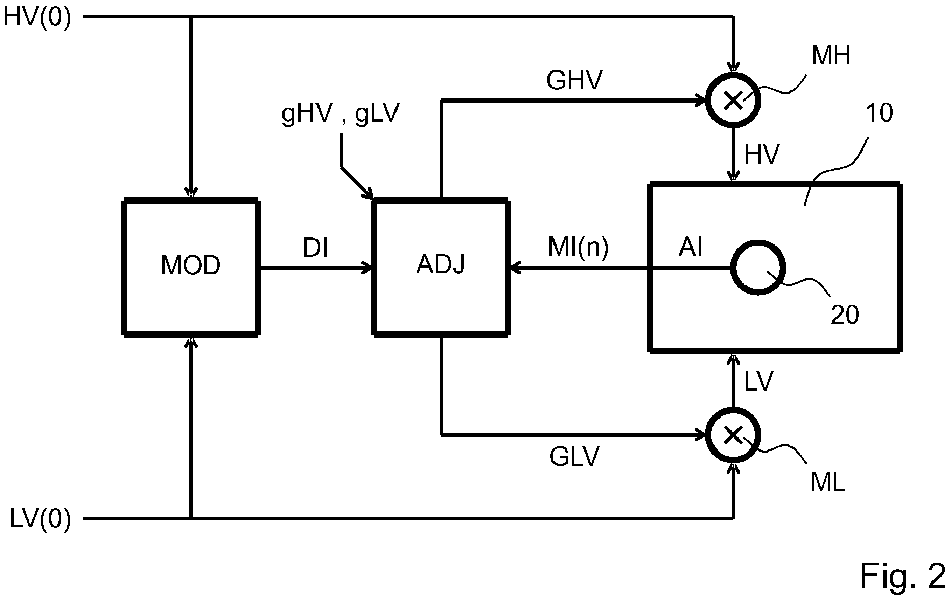

The control system in Fig. 2 assumes to receive an initial or initially desired input value HV(0) of the (high) anode voltage and an initial or initially desired input value LV(0) of the (low) filament voltage; the following description will explain how to select these two values HV(0) and LV(0) at best and automatically.

These two values HV(0) and LV(0) are supplied as input to a block MOD, which represents the model of the X-ray tube and which supplies as output the desired (after transient is over) value DI of the anode current.

Then, there is an adjustment block ADJ which receives the desired input value DI of the anode current and measured values MI(n) of the anode current. Block ADJ generates an output gain GHV for the anode voltage and an output gain GLV for the filament voltage; in principle, these two gains vary over time and depend, in addition to the desired value DI and to the measured values MI(n), also depend on two "learning rate" parameters gHV and gLV, respectively one for the anode voltage and one for the filament voltage.

Gain GHV is multiplied by the initial value HV(0) by a multiplier MH, thereby generating the anode voltage HV to be applied to the X-ray tube 10; in principle, the anode voltage HV varies over time.

Gain GLV is multiplied by the initial value LV(0) by a multiplier ML, thereby generating the filament voltage LV to be applied to the X-ray tube 10; in principle, the filament voltage LV varies over time.

It is to be noted that, in general, the adjustment block ADJ derives from the desired (after transient is over) value DI a desired current time profile DI(t), i.e. discretizing in time DI(n); therefore, desired values DI(n) and measured values MI(n) are processed in the adjustment block ADJ. In particular, the adjustment block ADJ uses desired current time profile in order to implement an MRAC control, as explained later.

According to the diagram in Fig. 2, there is a first control law for the anode voltage and a second control law for the filament voltage; both of these laws vary over time; in this way, it is possible to improve the responsiveness of the control system.

In general (the numerals in brackets refer to Fig. 1 and Fig. 2, but are not to be interpreted limitatively), the control system according to the present invention (30) has:
- a first output (32) adapted to provide a first signal (HV) to the X-ray tube (10) corresponding to an anode voltage,
- a second output (34) adapted to provide a second signal (LV) to the X-ray tube (10) corresponding to a filament voltage,
- a first input (36) adapted to receive (20) a third signal (AI) corresponding to measured values (MI(n)) of anode current,
- a second input (38) adapted to receive a user command from an interface system (40) related to a desired value (DI) of anode current for an exposure to be performed through the equipment (1);
the control system (30) is adapted to generate the first signal (HV) and the second signal (LV) as a function of the measured values (MI(n)) and the desired value (DI);
the control system (30) implements an adaptive control (i.e. in which the control law varies over time) at least as far as said first signal (HV) is concerned.

Preferably, the control system (30) implements an adaptive control (i.e. in which the control law varies over time) as far as both said first signal (HV) and to said second signal (LV) are concerned.

Although the meaning of the expression "adaptive control" should be known to a person skilled in the art, some explanations follow.

In general, a closed-loop controller C of a so-called plant P has two input variable vectors: a first vector corresponds to a reference input vector "r" and a second vector corresponds to an output variable vector "y" of the plant P. According to a non-adaptive closed-loop control method, the controller C has one output variable vector "u", wherein u=C(r,y); according to a simplified non-adaptive closed-loop control method, u=C(r-y). According to an adaptive closed-loop control method, the controller C has one output variable vector u, wherein u=C(r,y,k), and wherein "k" is a parameter vector; one or more of the parameters of vector "k" of controller C are varied while controlling the plant P; this means that the control law varies over time - it is to be noted that the control law may vary over time in other ways. It is possible to design the control system so that vector "k" is a function of vector "u" and/or vector "y".

More information on adaptive control may be found for example in the book "Adaptive Control" by I. D. Landau et al. (Springer), and in the book "Robust Adaptive Control" by Petros A. Ioannou and Jing Sun (Dover).

The control system 30 is adapted to generate signal HV independently of signal LV and signal LV independently of signal HV.

The control system 30 implements a control according to which both the anode voltage corresponding to signal HV and the filament voltage corresponding to signal LV vary over time during the exposure.

The control system 30 implements an MRAC (= Model Reference Adaptive Control) adaptive control, which is a control type known per se and therefore does not require further explanation herein - a detailed discussion of MRAC may be found for example at chapter 6 of the book "Robust Adaptive Control" by Petros A. Ioannou and Jing Sun (Dover Publications). In particular, the MRAC adaptive control of the control system 30 provides at least one fixed and predetermined "learning rate" parameter; preferably, there is a "learning rate" parameter for the anode voltage and a "learning rate" parameter for the filament voltage, both fixed and predetermined. In particular, the MRAC adaptive control of the control system 30 is of the SIMO (= Single Input Multiple Output - the single input corresponds to signal DI and the multiple output corresponds to signals HV and signal LV) type.

The control system 30 is adapted:
- to generate signal HV(0) according to an anode voltage value set through the interface system (such as system 40), and
- to generate signal LV(0) as a function of the desired anode current value DI and the anode voltage value SV set (such a generation is preferably made only as a function of values DI and SV).

With reference to Fig. 2, there is a functional block upstream of the two signals HV(0) and LV(0) adapted to the generation thereof (not shown in the figure). This functional block is part of the control system 30 but, alternatively, it may be part of the user interface system 40. It is to be understood that such a functional block is strictly related to block MOD since at the basis of these two blocks (i.e. "functional block and blck MOD") is the same X-ray tube model.

The generation of signal LV(0) is typically made by means of a fixed and predetermined function (in particular determined empirically); advantageously, this generation is made by means of a polynomial function.

This polynomial function results from the processing of a large amount of data derived from measurements made on different X-ray tubes; the variables to be considered are: anode voltage, filament voltage and anode current.

The control system 30 may advantageously implement a control that depends on the duration of the exposure to be made.

According to safety regulations (in particular, the IEC 60601-2-54 standard), the anode voltage must remain in a range of +/-10% with respect to the desired value and the anode current must remain in a range of +/-20% with respect to the rated value.

In the radiological equipment according to the present invention, it may be provided for the exposure to be blocked when the anode voltage and/or the anode current are outside these ranges.

Alternatively, only as regards the anode voltage, it may be provided that if the control system detects that the anode voltage HV is outside the range, gain GHV is limited to ensure that this does not happen.

The radiological equipment according to the present invention is adapted to be calibrated at least a first time at a factory and preferably repeatedly during its operation. Advantageously, the calibration consists in a barycentric interpolation of a polynomial function, such as a polynomial function to be used for generating the initial filament voltage; this interpolation may be made for three set points, such as (40KV, 50mA), (80kV, 100mA), (120KV, 80mA).

## Claims

1. Radiological equipment (1) comprising an x-ray tube (10) and a control system (30) adapted to control the x-ray tube (10), wherein said control system (30) has:
- a first output (32) adapted to provide a first signal (HV) to said x-ray tube (10) corresponding to an anode voltage,
- a second output (34) adapted to provide a second signal (LV) to said x-ray tube (10) corresponding to a filament voltage,
- a first input (36) adapted to receive (20) a third signal (AI) corresponding to measured values (MI(n)) of anode current,
- a second input (38) adapted to receive a user command from an interface system (40) related to a desired value (DI) of anode current for an exposure to be performed through the equipment (1);
wherein said control system (30) is adapted to generate said first signal (HV) and said second signal (LV) as a function of said measured values (MI(n)) and said desired value (DI);
wherein said control system (30) implements an adaptive control at least as far as said first signal (HV) is concerned.

2. Radiological equipment (1) according to claim 1, wherein said control system (30) implements an adaptive control as far as both said first signal (HV) and to said second signal (LV) are concerned.

3. Radiological equipment (1) according to the claim 1 or 2,
wherein said control system (30) is adapted to generate said first signal (HV) independently of said second signal (LV);
wherein said control system (30) is adapted to generate said second signal (LV) independently of said first signal (HV).

4. Radiological equipment (1) according to claim 1 or 2, wherein said control system (30) implements a control according to which both the anode voltage corresponding to said first signal (HV) and the filament voltage corresponding to said second signal (LV) vary over time during said exposure.

5. Radiological equipment (1) according to claim 1 or 2, wherein said control system (30) implements an adaptive control of the MRAC type.

6. Radiological equipment (1) according to claim 5, where said MRAC adaptive control has at least one "learning rate" parameter (gHV, gLV), and wherein said at least one "learning rate" parameter is fixed and predetermined.

7. Radiological equipment (1) according to claim 1 or 2, wherein, at the beginning of said exposure, said control system (30) is adapted:
- for generation of said first signal (HV(0)) according to an anode voltage value (SV) set through an interface system (40), and
- for generation of said second signal (LV(0)) as a function of said desired anode current value (DI) and of said anode voltage value (SV) set.

8. Radiological equipment (1) according to claim 7, wherein said generation of said second signal (LV(0)) is carried out by means of a fixed and predetermined function.

9. Radiological equipment (1) according to claim 8, adapted for calibration at least a first time at a factory, wherein siad calibration consists of a barycentric interpolation of a polynomial function.

10. Radiological equipment (1) according to claim 1 or 2, wherein said control system (30) implements a control that depends on the length of said exposure.
